# EUROPÄISCHE PATENTSCHRIFT

(11) **EP 4 114 604 B1**
(45) Veröffentlichungstag und Bekanntmachung des Hinweises auf die Patenterteilung: **02.07.2025**
(21) Anmeldenummer: 21712421.3
(22) Anmeldetag: 05.03.2021
(51) Int. Cl.: B23F 19/10, B23F 21/12, B23F 1/00, B23F 5/00

(54) **VERFAHREN DER SPANENDEN BEARBEITUNG EINES ZAHNFLANKENBEREICHS EINER WERKSTÜCKVERZAHNUNG, VERWENDUNG EINES ANFASWERKZEUGS, STEUERPROGRAMM MIT STEUERANWEISUNGEN ZUR DURCHFÜHRUNG DES VERFAHRENS UND VERZAHNUNGSMASCHINE**
METHOD FOR MACHINING A TOOTH FLANK REGION OF A WORKPIECE TOOTH ARRANGEMENT, USE OF A CHAMFERING TOOL, CONTROL PROGRAM HAVING CONTROL INSTRUCTIONS FOR CARRYING OUT THE METHOD, AND GEAR-CUTTING MACHINE
PROCÉDÉ D'USINAGE PAR ENLÈVEMENT DE COPEAUX D'UNE ZONE DE FLANC DE DENT D'UNE DENTURE DE PIÈCE À USINER, UTILISATION D'UN OUTIL DE CHANFREINAGE, PROGRAMME DE COMMANDE COMPORTANT DES INDICATIONS DE COMMANDE POUR EXÉCUTER LE PROCÉDÉ, ET MACHINE À TAILLER LES DENTURES

(30) Priorität: 05.03.2020 DE 102020001428
(43) Veröffentlichungstag der Anmeldung: 11.01.2023
(73) Patentinhaber: GLEASON-PFAUTER MASCHINENFABRIK GMBH, 71636 Ludwigsburg (DE)
(72) Erfinder: KRESCHEL, Jürgen, 71282 Hemmingen (DE)
(74) Vertreter: Leinweber & Zimmermann
(86) Internationale Anmeldenummer: PCT/EP2021/055651
(87) Internationale Veröffentlichungsnummer: WO 2021/176084

(56) Entgegenhaltungen:
- EP-A1- 2 694 239
- EP-A2- 0 890 406
- DE-A1- 10 116 259
- DE-A1- 10 309 116
- DE-A1- 102018 108 632
- DE-A1- 4 316 765
- DE-U1- 9 418 253
- US-A- 2 111 045
- US-A- 2 343 567
- BAUSCH ET AL: "Die ergänzende Zahnformung", 1 January 2006, INNOVATIVE ZAHNRADFERTIGUNG, EXPERT VERLAG, PAGE(S) 304 - 327, ISBN: 978-3-8169-1871-4, XP009187196

## Beschreibung

Die Erfindung betrifft das Gebiet der ergänzenden Zahnformung und dabei speziell ein Verfahren der spanenden Bearbeitung einer zwischen einer Zahnflanke und einer Stirnseite einer Werkstückverzahnung gebildeten Zahnkante mit einer Werkzeugverzahnung, bei der die Verzahnungen in Wälzkopplung miteinander um ihre jeweilige Verzahnungsdrehachse rotieren. Ein derartiges Verfahren gemäß dem Oberbegriff des Anspruchs 1 ist aus dem Dokument DE 94 18 253 U bekannt.

Verfahren zur ergänzenden Zahnformung sind bekannt, eine Übersicht findet sich in Thomas Bausch "Innovative Zahnradfertigung", 3. Auflage, auf S. 304. Ausgangspunkt der ergänzenden Zahnformung ist die Verzahnung nach ihrer Erzeugung beispielsweise durch das Wälzfräsen, Wälzstoßen oder Wälzschälen. So entstehen bei derartigen spanenden Verfahren zur Erzeugung von Verzahnungen zunächst sogenannte Primärgrate entlang der Verzahnungsstirnkante, an der die Schneiden des Bearbeitungswerkzeugs austreten, wie sie z.B. in der Literaturstelle Bausch im Bild 8.1-1 oben Mitte auf Seite 304 abgebildet sind. Diese Grate sind scharfkantig und fest, zur Vermeidung von Verletzungen und zur Verbesserung der Verzahnungsgeometrie für den Folgeprozess sind sie zu entfernen. Dies geschieht üblicherweise durch feststehende Entgratstähle, über mitlaufende Entgratscheiben oder Feilscheiben, und zwar üblicherweise unmittelbar im Zusammenhang mit dem Prozess der Verzahnungserzeugung.

Eine solche bloße Entfernung des Primärgrats beispielsweise durch Abdrehen oder, wie in DE 10 2014 018 328 offenbart, durch ein Abscheren mit der Rückseite eines Schälrads wird den Anforderungen an die Qualität der Zahnkanten oftmals nicht gerecht. Deshalb wird an den Zahnkanten (Stirnkanten) üblicherweise eine Fase gebildet. In der Literaturstelle Bausch ist im Bild 8.1-1 links oben die Stirnkante mit B bezeichnet und im Bild rechts oben mit der daran erzeugten Fase für eine Geradverzahnung gezeigt. Die Erfindung betrifft derartige Verfahren, bei denen durch Materialabtrag die Zahnkante, in der Form wie nach der Verzahnungserzeugung gebildet, beseitigt wird, geht somit über das Abscheren von von der Zahnkante abstehenden Primärgraten hinaus, welches die Form der bestehenden Zahnkante als solche unverändert lässt.

Eine seit langem verbreitete und immer häufig noch genutzte Anfastechnik ist die des sogenannten Wälzdrückentgratens oder Wälzentgratens. Hier werden die Kanten durch Drücken mittels Wälzentgraträdern plastisch in die Fase umgeformt. Die dabei auftretenden Materialverschiebungen führen allerdings zu Materialanhäufungen (Sekundärgrate) auf den Zahnflanken sowie an den Stirnseiten, die dann wieder durch geeignete Maßnahmen beseitigt werden müssen. Derartige Systeme sind beispielsweise in EP 1 279 127 A1 beschrieben.

Während das Wälzdrückentgraten ein sehr einfaches Verfahren darstellt (üblicherweise müssen die zahnradförmig gebildeten Werkzeuge noch nicht einmal drehangetrieben werden, vielmehr können sie freilaufend mit Anpressdruck gegen die anzufasende Werkstückverzahnung gehalten werden und laufen dann in Wälzkopplung mit dem angetriebenen Werkstück mit), so stellen die dabei erzeugten Sekundärgrate einen Nachteil dieses Verfahren dar. Während die Sekundärgrate an den Stirnseiten noch vergleichsweise einfach beispielsweise durch einen Entgratstahl wieder abgeschert werden können, sind insbesondere die auf den Zahnflanken erzeugten Sekundärgrate ein Problem für eine ggf. nach dem Härten der Werkstücke noch erfolgende Hartfeinbearbeitung. Will man diese flankenseitigen Sekundärgrate vorab entfernen, ist ein erneuter Bearbeitungsdurchgang auf der die Verzahnung erzeugenden Maschine bei tiefster Zustellung möglich, oder der Einsatz von Spezialwerkzeugen, wie etwa in DE 10 2009 018 405 A1 beschrieben.

In WO 2009/017248 wird vorgeschlagen, das Gewicht an Sekundärgraterzeugung von der Zahnflanke weg hin zur Stirnseite zu verlagern. Weitere Ansätze in der Technik gehen jedoch in die Richtung, den Materialabtrag/die Bildung der Fase schneidend und nicht drückend zu bewirken, durch Abtragen mit geometrisch bestimmter oder geometrisch unbestimmter Schneide (DE 10 2016 004 112 A1).

Für das schneidende Anfasen mit geometrisch bestimmter Schneide sind Varianten bekannt geworden (EP 1 495 824 A2), bei dem ein zum Anfasen der Zahnkanten dienendes Bearbeitungswerkzeug auf der gleichen Welle wie ein zur Erzeugung der Werkstückverzahnung dienender Wälzfräser angeordnet ist, aber auch separate Anordnungen (DE 10 2009 019 433 A1), die es erlauben, dass durch Verschwenken des Anfaswerkzeugs bei sowohl der Bearbeitung der stirnseitigen Enden an einer Stirnseite als auch an der anderen Stirnseite der Schnitt von innen nach außen erfolgen kann.

In DE 10 2013 015 240 A1 sind die sogenannten "Chamfer-Cut-Fräser" offenbart, die ähnlich wie ein Wälzfräser aussehen, bei denen jedoch die Flugkreise gleicher Profilbereiche überlappen, wobei die Profile derart gestaltet sind, dass bei einem Durchtritt eines Anfasfräserzahns durch eine Zahnlücke der Werkstückverzahnung letztere vollständig an beiden Flanken der Zahnlücke angefast wird. Ein weiteres schneidendes Anfasen, das sich noch enger am Wälzfräsen orientiert, ist in DE 10 2018 001 477 A1 beschrieben. Hier erfolgt das Anfasen im Einflankenverfahren in mehreren Schnitten über den Durchgang mehrerer Werkzeugzähne durch die Werkstückzahnlücke. Zum Beispiel kann für die Bearbeitung einer Flanke der bei beispielsweise vertikaler Werkstückachse die Werkzeugdrehachse bezogen auf die Horizontale verschwenkende Schwenkwinkel sogar auf Null gestellt werden.

Nach einem ähnlichen Prinzip wie der in DE 10 2013 015 240 A1 offenbarte "Chamfer-Cut-Fräser" gibt es auch schlagmesserartigen Abtrag an der Zahnkante, eingesetzt zur Erzeugung einer Abdachung z.B. für Getriebeverzahnungen, bei dem rotierende Schlagmesser, beispielsweise in der Form eines Endfräsers realisiert, mit ihrer Werkzeugdrehachse derart windschief zur Achse der Werkstückverzahnung angestellt werden, dass eine Zahnflanke der Werkstückverzahnung beim einmaligen Durchgang durch die Bearbeitungszone durch einen Schneidvorgang parallel zur zu erzeugenden Endgeometrie bearbeitet wird. Für die andere Werkstückzahnflanke kann ein zweites Schlagmesserwerkzeug angestellt werden. Dies ist beispielsweise in der Literaturstelle Bausch auf Seite 323 beschrieben.

Ein nochmals weiteres Verfahren zum schneidenden Anfasen ist in WO 2015/014448 offenbart. Hier geht man von dem Verzahnungseingriff des Wälzschälens mit Achskreuzwinkel aus und sorgt mit einem gegenüber der Normalstellung im Wälzschälverfahren zusätzlichen Kippung der Werkzeugachse für eine Veränderung der Schneidbewegung, über die dann die Fase erzeugt wird. Auf dem gleichen Prinzip basiert das in DE 10 2014 218 082 A1 offenbarte Verfahren, bei dem eine windschiefe Achskonfiguration bereits baulich in die Verzahnungsmaschine integriert ist. Bei diesen beiden, nach dem Prinzip des Wälzschälens funktionierenden Anfasbearbeitungen erfolgt der Schneidmechanismus über den Achskreuzwinkel, eben wie beim Wälzschälen.

Eine nochmals weitere Anfastechnik ist aus DE 10 2018 108 632 bekannt geworden, bei dem ein Stiftfräser durch Maschinenachsbewegung entlang der Zahnkante bewegt wird. Diese Anfastechnik eignet sich besonders gut für aufgrund von Störkonturen am Werkstück nicht gut mittels "Chamfer-Cut-Fräser" oder wälzfräsartigen Werkzeugen erreichbaren Stirnkanten.

Der Erfindung liegt die Aufgabe zugrunde, ein Verfahren der eingangs genannten Art abzielend auf eine gute Kombination aus vergleichsweiser Einfachheit und zufriedenstellender Flexibilität der Zahnkantenbearbeitung fortzubilden.

Diese Aufgabe wird in verfahrenstechnischer Hinsicht durch eine verfahrenstechnische Weiterbildung gelöst, die im Wesentlichen dadurch gekennzeichnet ist, dass die beiden Verzahnungsdrehachsen im Wesentlichen parallel zueinander stehen und die Bearbeitung über eine Mehrzahl von Werkstückdrehungen hinweg erfolgt, wobei eine werkstückdrehachsparallele erste Relativbewegung zwischen Werkstückverzahnung und Werkzeugverzahnung ausgeführt wird sowie durch eine insbesondere in Abhängigkeit des Bewegungsstands der ersten Relativbewegung variierte zweite Relativbewegung die Lage der Hüllkurve der Werkzeugzahn-Wälzstellungen relativ zu ihren Eingriffslage mit der Zahnflanke der Werkstückverzahnung in der Ebene orthogonal zur Werkstückdrehachse quer zum Profil der Werkstückverzahnung verschoben wird.

Bei dem erfindungsgemäßen Verfahren gemäß Anspruch 1 wird somit nicht entlang oder parallel der Fläche der zu bildenden neuen Flächenform, insbesondere Fase geschnitten, sondern aufgrund der im Wesentlichen parallel zueinander stehenden Verzahnungsdrehachsen und aufgrund der Verschiebung der Hüllkurve scheibchenweise in im Wesentlichen orthogonal zur Werkstückdrehachse stehenden Ebenen. Die anstelle der ursprünglichen Zahnkante gebildete Fläche, z.B. eine Fase, setzt sich aus den Endbereichen der über die in Abhängigkeit des Bewegungszustands der ersten Relativbewegung variierte Hüllkurve erreichten scheibchenartigen Materialabträge zusammen. Je nach gewünschter geringerer Rauheit der beispielsweise Fasenfläche kann die Anzahl von Spanvorgängen oder während der axialen ersten Relativbewegung ausgeführten Werkstückdrehungen entsprechend höher gewählt werden und damit die Anzahl der "Scheiben" höher gewählt werden. Es erfolgt somit ein Materialabtrag von dem Material an den Werkstückzahnflanken. Dabei wirken die Zahnflanken der Werkzeugverzahnung als Spanflächen der spanenden Bearbeitung.

So kann die erste Relativbewegung in einer einfachen Gestaltung als axiale Zustellbewegung ausgeführt werden, mit einer entsprechend hohen Anzahl an Zustellschritten. In diesem Fall könnte die zweite Relativbewegung oszillierend verlaufen, indem vor jedem nächsten Zustellschritt wieder auf die Eingriffslage (Nulllage) zurückgestellt wird. Mit Blick auf schnellere Bearbeitungszeiten wird es jedoch bevorzugt, dass die erste Relativbewegung als kontinuierliche Vorschubbewegung ausgeführt wird, beispielsweise mit einem linearen Verlauf über die Zeit, z.B. über eine Maschinenachse Z parallel zur Werkstückdrehachse C. Mit zunehmendem Vorschub Z(t) gelangt die Werkzeugverzahnung bezüglich der Werkstückdrehachse gesehen in wachsende Überlappung mit der Zahnlücke im Bereich der bearbeiteten Stirnseite der Werkstückverzahnung. Beispielsweise taucht die Werkzeugverzahnung im Verlauf der Bearbeitung so weit in die Werkstückverzahnung ein, soweit die Bearbeitung der Zahnkante gewünscht ist, bei Erzeugung einer Fase bis zur Fasentiefe. Ohne die zusätzlich ausgeführte Verschiebung der Hüllkurve gegenüber der Eingriffslage der Hüllkurve mit der Werkstückverzahnung in Wälzkopplung könnten z.B. Werkstückverzahnung und Werkzeugverzahnung aufeinander abwälzen wie Rad und Gegenrad, jedenfalls bereichsweise oder auch vollständig entlang wenigstens einer Zahnflanke, wenn gemäß einer bevorzugten Ausgestaltung das Profil der Werkzeugverzahnung als Gegenprofil zum Zahnprofil der Werkstückverzahnung ausgebildet ist. Aufgrund der Verschiebung der Hüllkurve in das Material der Werkstückzähne hinein kommt es jedoch zu dem oben erläuterten "scheibchenweisen" Materialabtrag, der zu Beginn an der Stirnseite bis hin zur gewünschten Ausdehnung des bearbeiteten Bereichs, beispielsweise der Fasenbreite reicht. Durch eine Verringerung der Verschiebung bei zunehmendem Vorschub kann dann die gewünschte Fasenfläche erzeugt werden. Wird die Verschiebungsbewegung ebenfalls als lineare Verschiebung über die Zeit ausgeführt, lassen sich in dem Beispiel der erzeugten Fasenfläche im Wesentlichen planare Flächenbereiche ausbilden (bzw. im Wesentlichen gerade Verläufe im Schnitt am Teilkreis gesehen), durch Abweichung bzw. nicht linear gewählte V(Z), worin V für die zweite Relativbewegung und Z für die erste Relativbewegung steht, lassen sich auch nahezu beliebige gewünschte Verläufe des Bearbeitungsbereichs und damit z.B. auch gekrümmte Fasen generieren.

In einer besonders bevorzugten Ausgestaltung trägt eine quer zur Achsabstandsachse der Drehachsen verlaufende Querbewegung von Werkstück- und/oder Werkzeugverzahnung zu der zweiten Relativbewegung bei. Denkbar ist grundsätzlich auch eine Verschiebung in Richtung der Achsabstandsachse (radial), jedoch gerade bei den typischen Eingriffswinkeln einer Großzahl von Werkstückverzahnungen eignen sich die genannten Querbewegungen besser, wobei die Radialbewegung, insbesondere wenn (wie später erläutert) auch eine Bearbeitung im Fußbereich mitgewünscht ist, miteinbezogen werden kann.

In einer in diesem Zusammenhang nochmals bevorzugten Ausführungsform umfasst die Querbewegung eine Zusatzdrehung ΔC der Werkstückverzahnung. Diese ist steuerungstechnisch einfach zu implementieren und erlaubt es, einfache Bearbeitungsmaschinen z.B. auch ohne tangentiale Maschinenachse zu realisieren. Diese Zusatzdrehung versteht sich als eine über eine etwaige bei Schrägverzahnungen auftretende Zusatzdrehung zur Aufrechterhaltung der Wälzkopplung hinausgehende Zusatzdrehung.

In einer alternativen oder zusätzlichen Variante kann die Querbewegung eine Bewegung einer linearen Maschinenachse umfassen, deren Richtungskomponente orthogonal zur Werkstückdrehachse und orthogonal zur Achsabstandsachse deren jeweilige Richtungskomponente entlang dieser Achsen überwiegt. In einer einfach gestalteten Maschinenachskonfiguration könnte diese Linearachse eine Tangentialachse Y sein, die sich quer, insbesondere orthogonal zur Radialachse (X) und einer axialen (werkstückachsparellelen) Achse Z erstreckt. Da der Effekt der Zusatzdrehung ΔC werkzeugabhängig gegenüber beispielsweise einer solchen Y-Komponente noch eine Radialkomponente beinhaltet, lässt sich durch Kombination dieser beiden Querbewegungskomponenten aus Zusatzdrehung ΔC einerseits und Linearbewegung ΔY andererseits eine Variation der Bearbeitung über die Zahnhöhe der Werkstückverzahnung einstellen. Anstelle oder zusammen mit einer Zusatzdrehung der Werkstückverzahnung könnte auch eine Zusatzdrehung ΔB der Werkzeugverzahnung herangezogen werden.

Das Verfahren sieht auch vor, dass auch die Zahnkante im Zahnfuß der Werkstückverzahnung bearbeitet werden kann. Insbesondere hierzu wird bevorzugt vorgesehen, dass eine in Richtung der Achsabstandsachse der Drehachsen verlaufende Radialbewegung von Werkstück und/oder Werkzeugverzahnung zu der zweiten Relativbewegung beiträgt. In einer besonders einfachen Gestaltung könnte man auch lediglich mit der Radialbewegung als zweite Relativbewegung arbeiten, dies würde allerdings im Fall der Erzeugung einer Fase die Fase im Fußbereich mit der Fasenform im Flankenbereich koppeln. Es wird daher besonders bevorzugt vorgesehen, dass neben der Radialbewegung auch noch eine Querbewegung nach einem der oben beschriebenen Mechanismen ausgeführt wird. Die zweite Relativbewegung wird dann in einer Tangential- und Radialkomponenten aufweisenden Form geführt.

In diesem Zusammenhang kann auch vorgesehen werden, dass durch Einstellung der Radialbewegung in Abhängigkeit des Bewegungszustands der ersten Relativbewegung die Form der Fase im Zahnfuß bewirkt wird und durch Einstellung der Querbewegung in Abhängigkeit des Bewegungsstands der ersten Relativbewegung und des Bewegungsstands der Radialbewegung die Form des Materialabtrags an der Zahnkante im Zahnflankenbereich bestimmt wird. Dies erlaubt eine Entkopplung der Gestaltung der umgearbeiteten Zahnkante im Flankenbereich gegenüber der im Fußbereich. Wie üblich kann eine Fasenbreite für die Tangentialrichtung Y aus einer auf die Flankennormalenrichtungen bezogenen Angabe über den Eingriffswinkel umgerechnet werden.

In einer weiteren bevorzugten Ausgestaltung wird durch eine Überlagerung der Querbewegungsbeiträge von Zusatzdrehung und linearer Maschinenachsbewegung der Materialabtragsformverlauf in Zahnhöhenrichtung bestimmt. Wie oben bereits angedeutet, wird dadurch eine größere Variabilität in der Gestaltung beispielsweise einer umgearbeiteten Zahnkante, etwa einer Fase erreicht.

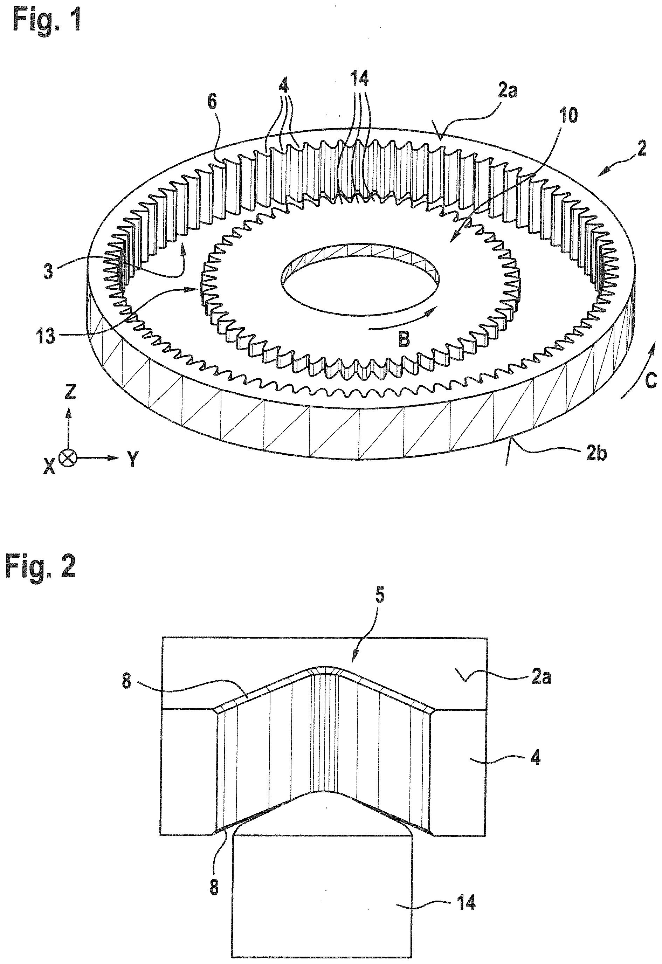

Eine weitere zweckmäßige Ausgestaltung könnte mit einem weiteren Bearbeitungsdurchgang insbesondere ansonsten gleicher oder bevorzugt phasenverschobener (z.B. um 180°) Kopplung der Bewegungen, und bevorzugt mit umgekehrter Bewegungsrichtung der ersten Relativbewegung ausgeführter Bewegungssteuerung ausgeführt werden. Mit einem solchen weiteren Bearbeitungsdurchgang können etwaige nicht vollständig vom Material des verbleibenden Werkstückzahns gelöste Späne abgeschert werden. Die Austauch- bzw. Rückzugsbewegung wird somit bevorzugt zur Glättung der beim Eintauchen gebildeten Fläche herangezogen. Bei z.B. gleichem Rückhub wie Vorschub pro Werkstückumdrehung wird die Höhe der (siehe später Fig. 2) Stufen an der Fasenfläche durch z.B. Phasenverschiebung von 180° halbiert. Insoweit es alternativ oder zusätzlich noch einer Spanabtrennung bedürfte, könnten auch z.B. Bürsten zum Einsatz kommen.

In einer besonders bevorzugten Ausgestaltung beträgt die Umlaufgeschwindigkeit am Zahnkopf des Werkstücks wenigstens 10 m/min, weiter bevorzugt wenigstens 20 m/ min, insbesondere wenigstens 40 m/min. Weiter bevorzugt sind diese Umlaufgeschwindigkeiten sogar noch höher als 60 m/min, weiter bevorzugt als 120 m/min, insbesondere als 180 m/min. Die Bearbeitung kann demnach annähernd auf Größenordnungen von Drehzahlen stattfinden, die etwa auch beim Wälzschälen typischer Verzahnungen auftreten. Auf diese Weise hält sich bei vernünftigen Schnittbedingungen die Gesamtdauer der Bearbeitung auch dann noch in vernünftigen Grenzen, wenn eine hohe Anzahl von Werkstückdrehungen ausgeführt wird, etwa 3 oder mehr, auch 6 oder mehr, sogar 10 oder mehr.

In einer bevorzugten Gestaltung beträgt der Vorschub pro Werkstückumdrehung für die erste Relativbewegung wenigstens 2 µm, bevorzugt wenigstens 4 µm, nochmals weiter bevorzugt wenigstens 10 µm, insbesondere wenigstens 20 µm, und/oder nicht mehr als 0,6 mm, bevorzugt nicht mehr als 0,4 mm, insbesondere nicht mehr als 0,2 mm.

Mit dem Verfahren könnten nicht nur Fasen, sondern auch beispielsweise abdachungsähnliche Strukturen an Verzahnungen erzeugt werden, etwa für Schaltverzahnungen. In einer besonders bevorzugten Verfahrensgestaltung wird mit der Bearbeitung eine Fase an der Zahnkante erzeugt, deren Fasenbreite bevorzugt geringer ist als 30%, insbesondere als 20% der Zahndicke am Teilkreis.

Es sind Varianten denkbar, in denen die Werkzeugverzahnung unterschiedlich gestaltete Bereiche aufweist und insbesondere als über einen gewissen Bereich an Profilen abdeckenden Bereich gebildete Verzahnung ausgelegt ist, und man ggf. die Bearbeitung in mehreren Bearbeitungsdurchgängen gestaltet, in denen unterschiedliche Verzahnungsbereiche die Bearbeitung an unterschiedlichen Bereichen in Zahnhöhenrichtung der Werkstückverzahnung ausführen. In einer besonders bevorzugten Ausgestaltung ist das Profil der Werkzeugverzahnung jedoch im Wesentlichen das der bezüglich der Wälzkopplung Gegenverzahnung der Werkstückverzahnung. In diesem Fall handelt es sich bei der Werkzeugverzahnung um eine werkstückgebundene Verzahnung, im Gegensatz zu Universalwerkzeugen. Dies bedeutet jedoch nicht, dass im Zweiflankenverfahren gearbeitet werden muss. Vielmehr wird es bevorzugt, dass die Bearbeitung im Einflankenverfahren ausgeführt wird, wobei dann z.B. im Anschluss an die Bearbeitung der einen Zahnflanke(n) an einer der jeweiligen Zahnlücke(n) des Werkstücks die andere(n) Zahnflanke(n) bearbeitet werden.

Auch bei einem solchen Einflankenverfahren wird es bevorzugt, dass die Bearbeitung der anderen Zahnflanke(n) mit dem gleichen Werkzeug und/oder der gleichen Aufspannung erfolgt wie die der einen Zahnflanke(n). Dies erleichtert den Verfahrensablauf und verringert die Anzahl einzusetzender Werkzeuge.

In einer weiteren zweckmäßigen Ausgestaltung ist die Zahndicke der Werkzeugverzahnung gegenüber der für die bei der Wälzkopplung für eine Zweiflankenbearbeitung erforderlichen Zahndicke vermindert. Dies verringert die Kollisionsgefahr an der Gegenflanke.

Die Werkzeugverzahnung kann dabei im Sinne einer Vollverzahnung zu jeder Zahnlücke des Werkstücks auch einen passenden Werkzeugzahn aufweisen (Teilung ohne Sprungfaktor). Das Verfahren lässt sich jedoch auch mit weniger Zähnen als der Vollverzahnung durchführen, beispielsweise mit einem Sprungfaktor von 2 oder 3, bevorzugt jedoch mit wenigstens noch so vielen Zähnen, dass im Mittel ein Sprungfaktor 4 nicht überstiegen wird, insbesondere ein Sprungfaktor 3 nicht überstiegen wird.

In einer bevorzugten Ausgestaltung kann die Werkzeugverzahnung bezüglich der Abmessung in Richtung der Werkzeugdrehachse dünn ausgestaltet sein, beispielsweise mit einer diesbezüglichen Abmessung von nicht höher als 1,5 cm. Da die Arbeitsleistung der Werkzeugverzahnung im Vergleich zu Arbeitsleistungen von Verzahnungen erstellenden Werkzeugen geringer ausfällt, können sogar nochmals deutlich dünnere Verzahnungen zum Einsatz kommen, auch bei denen die Abmessung geringer ist als 1 cm, weiter bevorzugt geringer ist als 0,7 cm, es sind jedoch auch Varianten mit geringeren Scheibendicken der Werkzeugverzahnung von 0,4 cm oder weniger denkbar, bis hin zu Scheibendicken nicht größer als 3 mm, sogar 2 mm sind denkbar. Wenn im Miniaturbereich gearbeitet werden soll, wird auch an Scheibendicken von nicht mehr als 1 mm, sogar nicht mehr als 0,5 mm, insbesondere nicht mehr als 0,3 mm gedacht, etwa durch Drahterodieren hergestellt. Mit derartigen Werkzeugen lassen sich auch Zahnkantenbearbeitungen ausführen, wenn durch Schultern oder andere Störkonturen, beispielsweise von Werkstücken mit mehreren Verzahnungen, nur wenig (axialer) Bearbeitungsraum vorhanden ist.

Das Werkzeug kann aus Vollmaterial gebildet sein, auch gesintert, insbesondere auch als Einwegwerkzeug. Ebenfalls könnte ein Grundkörper auch mit Schneidzähnen oder Schneidzahngruppen bestückt werden, etwa in Form von Schneidplatten, insbesondere Wendeschneidplatten. Durch Vertiefungen in den Zahnstirnflächen können konstruktive Freiwinkel gebildet sein. Keilwinkel von kleiner als 90° können alternativ oder zusätzlich durch konisch gestaltete Werkzeugzahnflanken erreicht werden.

Für eine Überlagerung von Beiträgen unterschiedlicher Maschinenachsen zur Realisierung der Verschiebungsbewegung der Hüllkurve ist es günstig, in der Vorstellung von einer diskreten Zustellung in Axialrichtung auszugehen und sich zu einer vorgegebenen axialen Eindringtiefe die zu erreichende (gewünschte) Verschiebung anzusehen. Beispielsweise könnte man zunächst über die gewünschte radiale Eindringtiefe am Zahnfuß, an welchem weder Tangential- noch Zusatzdrehungen einen merklichen Formabänderungsbeitrag liefern, die Radialbewegung X(Z) festlegen. Die Festlegung von z.B. Y(Z) erfolgt dann unter Berücksichtigung, dass abhängig vom Eingriffswinkel die Radialverschiebung X(Z) einen zusätzlichen Beitrag auch in Richtung Y bewirkt. Wird die Werkstückdrehachse eingebunden, kann je nach Genauigkeitsanforderungen berücksichtigt werden, dass auch die Verschiebung über ΔC eine miteinzubeziehende Komponente in Radialrichtung aufweist, die geringfügig über die Zahnhöhe der Werkstückverzahnung variiert. Setzt man sowohl ΔC als auch ΔY ein, ergibt sich somit ein zusätzlicher Freiheitsgrad, mit dem die Gestaltung der Fase auch über die Zahnhöhe noch variiert werden kann, beispielsweise zur Erzeugung kommaförmiger Fasen. Für letztere, den Zahnfuß ohnehin aussparende Bearbeitungen steht zudem die Radialachse X als weiterer Freiheitsgrad zur Verfügung.

Wie oben bereits erläutert, kann sich eine mit dem Verfahren gebildete Fläche aus den Endbereichen der über die in Abhängigkeit des Bewegungszustands der ersten Relativbewegung variierende Hüllkurve erreichten Materialabträgen zusammensetzen. Diese Art der Erzeugung von neuen Verzahnungsoberflächen (Bereichen) wird von der Erfindung auch unabhängig von der genauen Funktion der neuen Verzahnungsoberfläche sowie der konkreten Orientierung der Verzahnungsdrehachsen zueinander als eigenständig schutzwürdig offenbart. Hierzu wird von der Erfindung in einem weitergehenden Aspekt bereitgestellt ein

Verfahren der spanenden Bearbeitung eines Zahnflankenbereichs einer Werkstückverzahnung, insbesondere einer zwischen einer Zahnflanke und einer Stirnseite einer Werkstückverzahnung gebildete Zahnkante, mit einer Werkzeugverzahnung, bei der die Verzahnungen in Wälzkopplung um ihre jeweilige Verzahnungsachse rotieren, und bei dem durch die Bearbeitung an dem Zahnflankenbereich eine neue Verzahnungsoberfläche gebildet wird, das im Wesentlichen dadurch gekennzeichnet ist, dass die Bearbeitung über eine Mehrzahl von Werkstückdrehungen hinweg erfolgt, wobei eine erste Relativbewegung mit einer werkstückdrehachsparallelen Richtungskomponente zwischen Werkstückverzahnung und Werkzeugverzahnung ausgeführt wird sowie durch eine insbesondere in Abhängigkeit des Bewegungszustands der ersten Relativbewegung variierte zweite Relativbewegung die Lage der Hüllkurve der Werkzeugzahn-Wälzstellungen relativ zu ihrer Eingriffslage mit der Zahnflanke der Werkstückverzahnung in Projektion auf die Ebene orthogonal zur Werkstückdrehachse C gesehen quer zum Profil der Werkstückverzahnung und insbesondere orthogonal zur Werkzeugdrehachse verschoben und dadurch bei einem Durchgang einer jeweiligen Werkstückdrehung Material entlang einer Schnittfläche abgenommen wird, wobei sich die Form der neuen Verzahnungsfläche aus den Endbereichen der Schnittflächen von der Mehrzahl von Werkstückdrehungen zusammensetzt. Es wird somit bevorzugt in einer Ebene geschnitten, die im Wesentlichen orthogonal zur Werkzeugdrehachse liegt.

Es versteht sich, dass die oben erläuterten Aspekte zu bevorzugten Gestaltungen insbesondere zur Bildung einer Phase als neue Verzahnungsoberfläche auch für das soeben definierte Verfahren herangezogen werden können.

In einer bevorzugten Gestaltung könnten die Verzahnungsachsen von Werkzeug und Werkstück beide in der gleichen Ebene liegen, eine jedoch unter einem Winkel zu der anderen geneigt sein. Diese Achsstellung kann sich insbesondere für Fälle eignen, in denen ein stirnkantennaher Bereich bearbeitet wird, und die betreffende Stirnebene der Verzahnung nicht orthogonal zur Werkstückachse verläuft, sondern ebenfalls gegenüber diesem geneigt ist. Die Neigung der Relativachsen könnte dann auf diesen Neigungswert der Stirnfläche gegenüber der Orthogonalebene zur Werkstückdrehachse eingestellt werden.

Bereits angesprochen wurden neben der Erzeugung von Phasen als neue Verzahnungsoberflächenbereiche die Erzeugung von Abdachungen. In diesem Zusammenhang könnte ebenfalls eine Einführungsfläche (lead-in surface) eines Starterritzels erzeugt werden.

Hinsichtlich des oben angesprochenen Neigungswinkels wird auch daran gedacht, neue Verzahnungsoberflächen an Kegel- oder Beveloid-Verzahnungen zu schaffen, wobei das Werkzeug in einem derartigen Winkel angesetzt wird, dass das Schneidprofil des Werkzeugs parallel zu dem Profil der Phase an einer konischen Außenseite der Kegelverzahnung angeordnet wird, im Wege der Achsorientierung von Werkzeug und Kegelrad.

In diesem Zusammenhang ist ebenfalls vorgesehen, dass für die Erzeugung der neuen Verzahnungsoberfläche, insbesondere einer Phase, nicht nur mit zylindrisch verzahnten Werkstücken gearbeitet wird, sondern auch balligen Verzahnungen oder eben insbesondere Kegelradverzahnungen. In diesem Zusammenhang wird es bevorzugt, dass mit Kegelradverzahnungen (Beveloiden und Hypoiden) gearbeitet wird, die für Achswinkel von weniger als 60°, weiter bevorzugt weniger als 40°, insbesondere weniger als 30° ausgelegt sind (für das einzelne Werkstück entsprechend mit einer Konizität von etwa der Hälfte dieser Werte). Entsprechend könnte dann der Neigungswinkel des Werkzeugs auf den Wälzkegelwinkel des Kegelrads eingestellt werden.

In einer weiteren bevorzugten Gestaltung könnte das Verzahnungswerkzeug bereits in eine Werkzeuganordnung mit einem Hauptwerkzeug oder in das Hauptwerkzeug integriert werden, welches in der Werkstückverzahnung, an der mit den Verfahren eine neue Verzahnungsoberfläche, insbesondere eine Fase, erzeugt wird, integriert ist. Insbesondere könnte die Verzahnung mit der Rückseite eines Stoßrads (beim Wälzstoßen) oder Schälrads (beim Wälzschälen) erzeugt werden. Insbesondere für eine Hauptbearbeitung zur Erzeugung durch Wälzschälen könnte daran gedacht werden, das Werkzeug auch als Kombiwerkzeug mit dem Anfaswerkzeug zu gestalten, insbesondere in Form von zwei scheibenartigen Werkzeugen, die insbesondere unmittelbar in Axialrichtung übereinander angeordnet sind, so dass ihre Drehachsen zusammenfallen. Ein solches Verzahnungswerkzeug könnte auch an einer ersten Stirnseite mit den Schneidkanten zum Wälzschälen mit einem für das Wälzschälen ausgelegten Profil gebildet sein, und an der Rückseite mit einem für das Wälzstoßen der identischen Verzahnung ausgelegtem Profil, welches dann unter parallelen (wie beim Wälzstoßen) oder ggf. unter zwar bevorzugt in einer Ebene liegenden, jedoch unter einem Neigungswinkel zueinander stehenden Achsen ausgeführt werden, während für das die Verzahnung erzeugende Wälzschälverfahren ein Achskreuzwinkel eingestellt wird, auf den der Wälzschälprozess ausgelegt ist.

Gemäß einem weiteren Aspekt müsste die neue Verzahnungsoberfläche auch nicht zwingend an eine Stirnseite der bearbeiteten Verzahnung angrenzen. Beispielsweise wird auch an die Erzeugung von Hinterlegungen unter insbesondere zueinander geneigter oder insbesondere mit parallelen Drehachsen gedacht. Hierzu könnte das Verzahnungswerkzeug auch als sehr dünne Scheibe gefertigt werden und zunächst in einem ersten Schritt ein entsprechend dünner Einschnitt noch nicht über die volle Hinterlegungsbreite geschaffen werden, ggf. unter oszillierend ausgeführter zweiter Relativbewegung bis hin zur gewünschten Hinterlegungstiefe aber noch auf gleicher Höhe in Werkstückachsrichtung, und anschließend die Verfahrensschritte wie bei der Erzeugung einer Phase entsprechend der obigen Beschreibung herangezogen werden, jedoch mit gleicher Ausdehnung der Querbewegung zur Ausbildung gleichmäßig tiefer Einschnitte bis zum Erreichen der axial vollen Hinterlegungsbreite.

Insoweit ist erkennbar und offenbart, dass das Verfahren durchaus und bevorzugt unter parallel zueinander stehenden Verzahnungsdrehachsen ausgeführt werden kann, um durch die Bearbeitung mit der ersten und zweiten Relativbewegung eine Zahnkante zu bearbeiten, insbesondere eine Fase zu erzeugen, zum anderen jedoch das Verfahren mit der Zusammensetzung der neuen Verzahnungsoberfläche aus den Endbereichen der Schnittflächen von der Mehrzahl von Werkstückdrehungen auch für neue Verzahnungsoberflächen anwendbar ist, bei dem mit nicht-parallelen Verzahnungsdrehachsen gearbeitet wird oder bei dem keine Bearbeitung der Zahnkante, insbesondere keine Bildung einer Fasenfläche als neue Verzahnungsoberfläche erfolgt.

In vorrichtungstechnischer Hinsicht wird bereitgestellt die Verwendung gemäß Anspruch 17 eines Anfaswerkzeugs zur spanenden Bearbeitung einer zwischen einer Zahnflanke und Stirnseite einer Werkstückverzahnung gebildeten Zahnkante unter im Wesentlichen mit zueinander parallelen Verzahnungsdrehachsen in Wälzkopplung miteinander ausgeführten Bearbeitung in Form einer Werkzeugverzahnung mit durch die Zahnflanken der Werkzeugverzahnung gebildeten Spanflächen, insbesondere ausgelegt für eine Bearbeitung gemäß einem Verfahren nach einem der oben erläuterten Aspekte und/oder mit den oben angegebenen Gestaltungseigenschaften.

Die Erfindung wird auch durch ein Steuerprogramm gemäß Anspruch 18 geschützt, das Steueranweisungen enthält, die die Maschine zur Durchführung eines Verfahrens nach einem der vorgenannten Verfahrensaspekte steuern, wenn auf einer Steuereinrichtung der Verzahnungsmaschine ausgeführt.

Des Weiteren stellt die Erfindung bereit eine Verzahnungsmaschine gemäß Anspruch 19 mit wenigstens einer Werkstückspindel zum drehenden Antrieb einer Werkstückverzahnung um ihre Werkstückdrehachse, und wenigstens einer Werkzeugspindel zum drehenden Antrieb einer Werkzeugverzahnung um ihre Drehachse, wenigstens einer ersten Maschinenachse, die eine werkstückdrehachsparallele erste Relativbewegung zwischen Werkstückverzahnung und Werkzeugverzahnung erlaubt, gekennzeichnet durch eine Steuereinrichtung, welche Steueranweisungen zur Ausführung eines Verfahrens nach einem der vorgenannten Verfahrensaspekte aufweist.

Die Verzahnungsmaschine kann dabei ein größerer Maschinenkomplex sein, der auch eine Werkzeughauptspindel zur Erzeugung der Verzahnung beinhaltet. Die Verzahnungsmaschine kann jedoch auch als eigenständige Anfasstation ausgebildet sein. In einer einfachen Gestaltung wird eine Maschinenachse mit Hauptkomponente in Richtung der Werkstückdrehachse vorgesehen, für die erste Bewegung bevorzugt in Richtung der Werkstückdrehachse. Bei Vertikalmaschinen wäre dies die Vertikalachse.

Bevorzugt ist weiterhin eine Radialachse vorgesehen, um die Station für Werkstücke und Werkzeuge unterschiedlicher Durchmesser einsetzbar zu halten, und gegebenenfalls als zusätzliche Vorschubachse. In einer weiteren Ausführungsform kann auch noch eine Tangentialachse als lineare Maschinenachse realisiert sein, bevorzugt orthogonal zur Radial- und orthogonal zur Werkstückdrehachse. In einer besonders bevorzugten Ausgestaltung verfügt die Anfasstation über keine Schwenkachse oder Kippachse, welche die Parallelanordnung von Werkzeugdrehachse und Werkstückdrehachse ändern könnte. Ebenfalls bevorzugt kann auf die lineare Tangentialachse verzichtet werden, um die Station einfach zu gestalten.

Die Werkzeugdrehachse ist bevorzugt über einen Direktantrieb oder auch über einen Indirektantrieb eine angetriebene Achse. Es versteht sich, dass eine Steuerung der als NC-Achsen ausgeführten Maschinenachsen vorhanden ist, welche in der Lage ist, eine synchrone Wälzkopplung einzuhalten und durch Zusatzdrehungen gezielt und kontrolliert außer Phase zu bringen. In diesem Zusammenhang ist bevorzugt eine Einmitteinrichtung vorgesehen, die beispielsweise über einen berührungslosen Einmittsensor verfügt.

Die erfindungsgemäß auch sehr dünn ausgestalteten Anfasräder erlauben auch eine Zahnkantenbearbeitung unter ungünstigen Platzbedingungen wie etwa durch Störkonturen bedingt und können z.B. auch als Tandemwerkzeug ausgeführt sein. Denkbar ist auch eine drehfest verbundene Kombination eines Schälrads zum Erzeugen der Werkstückverzahnung und dem erfindungsgemäßen Anfasrad. Die Maschinenachsen der Hauptbearbeitungseinheit stehen dann für das Anfasen zur Verfügung, allerdings auf Kosten längerer Nebenzeiten. Ebenfalls ist es möglich, zwei für unterschiedliche Werkstückverzahnungen ausgelegte erfindungsgemäße Anfasräder drehfest zu einem Tandemwerkzeug zu koppeln, beispielsweise für ein werkzeugwechselfreies Anfasen unterschiedlicher Werkstückchargen oder die Bearbeitung von Werkstücken mit zwei oder mehr unterschiedlichen Verzahnungen.

Weitere Merkmale, Einzelheiten und Vorteile der Erfindung ergeben sich aus der nachfolgenden Beschreibung mit Bezug auf die beigefügten Figuren, von denen
- Fig. 1: ein zahnradförmiges Werkzeug und eine von dem Werkzeug bearbeitete Verzahnung zeigt,
- Fig. 2: einen Ausschnitt des Werkstücks mit einer erzeugten Fase zeigt,
- Fig. 3a: eine erläuternde Ansicht zur Erzeugung der Fase ist,
- Fig. 3b: einen vergrößerten Ausschnitt aus Fig. 3a zeigt,
- Fig. 4: eine Momentstellung bei einer Rückzugsbewegung zeigt,
- Fig. 5: eine bezüglich eines Werkstückzahnprofils verschobene Hüllkurve zeigt,
- Fig. 6a, 6: erläuternde Ansichten einer Einflankenbearbeitung sind,
- Fig. 7: eine Darstellung einer vergleichsweise dünnen Werkzeugverzahnung ist,
- Fig. 8a, b: schematische Darstellungen zur Bearbeitung von schwer zugänglichen Zahnkanten sind und
- Fig. 9: schematisch eine Anfaseinheit zeigt.

In Fig. 1 ist in einer Perspektivansicht ein Werkstück 2 mit einer bereits hergestellten Innenverzahnung 3 gezeigt. Die Innenverzahnung 3 ist in diesem Ausführungsbeispiel geradverzahnt, es können jedoch ebenfalls schräg verzahnte Verzahnungen bearbeitet werden, wie auch Außenverzahnungen.

Der in Fig. 1 gezeigte Bearbeitungseingriff erfolgt an der unteren Stirnseite 2b des Werkstücks 2, in diesem Ausführungsbeispiel sollen die Zahnkanten der im Wesentlichen evolventischen Zähne 4 der Innenverzahnung 3 an der Stirnkante 2b mit einer Fase versehen werden. Es versteht sich, dass eine weitere Anfasbearbeitung dann auch an der anderen Stirnseite 2a vorgenommen werden kann. Das Verfahren eignet sich jedoch auch für wälzbare nichtevolventische Werkstückverzahnungen.

Die Bearbeitung erfolgt mit einer Werkzeugverzahnung 13. Hierzu ist in diesem Ausführungsbeispiel ein scheibenförmiges Werkzeug 10 vorgesehen, das mit der Werkzeugverzahnung 13 außenverzahnt ist. In diesem Ausführungsbeispiel ist die Werkzeugverzahnung 13 die Gegenverzahnung der Innenverzahnung 3. Das heißt, wenn Werkstück 2 und Werkzeug 10 in synchroner Wälzkopplung miteinander kämmen, tauchen die Zähne 14 der Werkzeugverzahnung 13 in die zwischen den Zähnen 4 der Innenverzahnung 3 gebildeten Zahnlücken ein und wälzen auf den Werkstückzahnflanken ab. Die Hüllkurve der Wälzstellungen der Werkzeugzähne 14 gibt den im Wesentlichen evolventischen Profilverlauf an der Zahnflanke des Werkstückzahns 4 wieder. Wenn wie in bevorzugten Verfahrensgestaltungen die Bearbeitung im Einflankenverfahren erfolgt, können die Zahndicken der Werkzeugzähne 14 auch dünner gestaltet werden als für einen kontaktierenden Zweiflankenwälzeingriff erforderlich. Wie ebenfalls aus Fig. 1 erkennbar ist, ist kein Achskreuzwinkel zwischen den Drehachsen C der Werkstückverzahnung 3 und B der Werkzeugverzahnung 13 vorgesehen, die Drehachsen B und C verlaufen parallel. Die weiteren Achsen X, Y und Z, die als Koordinatensystem in Fig. 1 dargestellt sind, können zum Teil oder ganz als lineare Maschinenachsen einer nicht dargestellten Bearbeitungsmaschine realisiert werden, etwa Z (Vorschub, parallel zu C), X Radialachse (Achsabstandsrichtung), Y Tangentialrichtung.

Die in Fig. 1 dargestellte Relativlage zwischen Werkzeugverzahnung 13 und Werkstückverzahnung 3 ist im Wesentlichen die Situation zu Bearbeitungsbeginn. Vor Bearbeitungsbeginn sind die zwischen der Stirnseite 2b des Werkstücks 2 und den daran angrenzenden Zahnflanken der Zähne 4 angestellten Kanten 6 noch scharfkantig ausgebildet, beispielsweise in einer Form wie durch ein vorangehendes Verfahren zur Erzeugung der Innenverzahnung 3 hervorgegangen, etwa durch Wälzschälen, Wälzfräsen oder Wälzstoßen oder andere formgebende Verfahren, wobei bei der spanenden Verzahnungserzeugung gebildete Primärgrate gegebenenfalls bereits entfernt sind.

Das Ziel der Zahnkantenbearbeitung dieses Ausführungsbeispiels und zahlreicher bevorzugter Verfahrensgestaltungen ist die Bildung einer Fase 8 an der Stelle der vormaligen Zahnkante 6, wie sie z.B. in der Darstellung von Fig. 2 abgebildet ist. Zu Zwecken einer vergrößerten Darstellung zeigt Fig. 2 nur den fußnahen Bereich einer Zahnlücke 5 und den kopfnahen Bereich eines Werkzeugzahns 14.

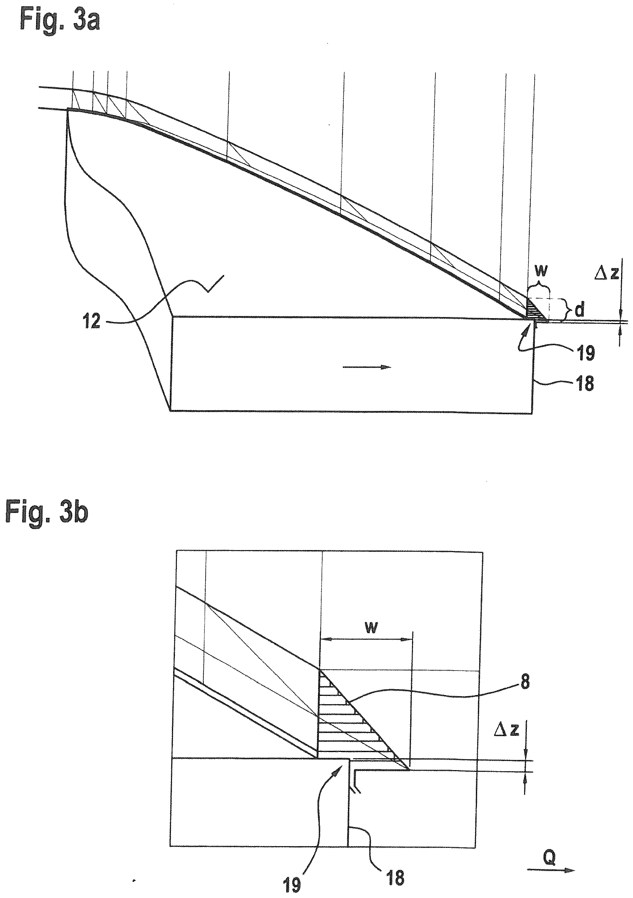

Anhand von Fig. 3a wird nun ein bevorzugtes Beispiel für das Erzeugen der Fase 8 beschrieben. Durch eine axiale Relativbewegung wird die Werkstückverzahnung 13 um Δz über das axial gesehene Höhenniveau der unteren Stirnseite 2b der Werkstückverzahnung 3 bewegt. Zudem ist, beispielsweise durch eine Zusatzdrehung ΔC des Werkstücks gegenüber der Phasenlage der synchronisierten Wälzkopplung, die Hüllkurve der Werkzeugzahn-Wälzstellungen um einen Betrag in Tangentialrichtung Y verschoben, der einer Fasenbreite w entspricht, welche in diesem Ausführungsbeispiel beispielsweise 0,3 mm beträgt. Dadurch schneidet eine scharfe Kante 19, die zwischen der Stirnseite 12 des Werkzeugs 10 und der durch die Zahnflankenfläche der Werkzeugverzahnung 13 gebildeten Spanfläche 18 am Werkzeug 10 vorgesehen ist, unter Ausführung der Wälzbewegung des Wälzeingriffs Material an der Stirnseite 2b des Werkstücks 2 ab. Die Schneidbewegung ist hier im Wesentlichen in der Ebene orthogonal zu der Drehachse C. Sie endet bei einem Abstand von der vormaligen Zahnkante 6 in Größe der Fasenbreite w. Durch Wiederholung dieses Vorgangs bei axial tiefer eingetauchtem Werkzeug 10, jedoch mit einer verringerten Verschiebung um ΔY, reicht der nächste Schnitt beim nächsten Umlauf nur noch bis w- Δ Y, und so weiter, wie in Fig. 3a erkennbar. Man erhält somit einen scheibchenweisen Abtrag unterschiedlicher Schneidtiefe in Tangentialrichtung und damit auch unterschiedlicher Ausdehnung in Flankennormalenrichtung. Zum Ende der Axialbewegung bei Erreichen der axialen Eindringtiefe in Höhe der gewünschten Fasentiefe d ist die Verschiebung wieder bei Null und in diesem Ausführungsbeispiel einer Realisierung der Querbewegung über eine Zusatzdrehung ΔC die Phasenlage der synchronen Wälzkopplung wieder erreicht.

Würde man die Verschiebungsbewegung nur über lineare Maschinenachsen bewerkstelligen, bliebe die Phasenlage der synchronen Wälzkopplung während der Bearbeitung erhalten, und die Wirkung des scheibchenweisen Abtragens wird durch eine entsprechende Verschiebung der Hüllkurve über Maschinenachseinstellungen erreicht, etwa über die Tangentialachse Y. Denkbar ist auch ein Wirken oder Mitwirken der Radialachse X. Zudem können Kombinationen aus Achsbewegungen X,Y; X, ΔC; Y, ΔC; X, Y, ΔC herangezogen werden. Eine Beteiligung der Radialachse wird bevorzugt, wenn auch eine Fußfase erzeugt werden soll, wie in Fig. 2 dargestellt.

Bevorzugt und wie in diesem Beispiel wird die Axialbewegung im Wege einer kontinuierlichen Vorschubbewegung mit einem einstellbaren Vorschub pro Werkstückumdrehung erfolgen. In dem gezeigten Ausführungsbeispiel ist zum Beispiel eine Werkstückdrehzahl von 1000 U/min eingestellt und ein Vorschub pro Werkstückdrehung von 0,02 mm. Zur Erzeugung der in Fig. 3 gezeigten Fase mit beispielsweise einer Fasenbreite von ca. 0,3 mm und einer Fasentiefe d von ebenfalls ca. 0,3 mm entsprechend einem Fasenwinkel von ca. 45° werden 15 Werkstückumdrehungen durchgeführt (in Fig. 3 und deren vergrößertem Ausschnitt in Fig. 3a ist zu Zwecken der einfachen Darstellung nur eine geringere Anzahl von Stufen des stufen- und scheibchenweisen Abtrags dargestellt).

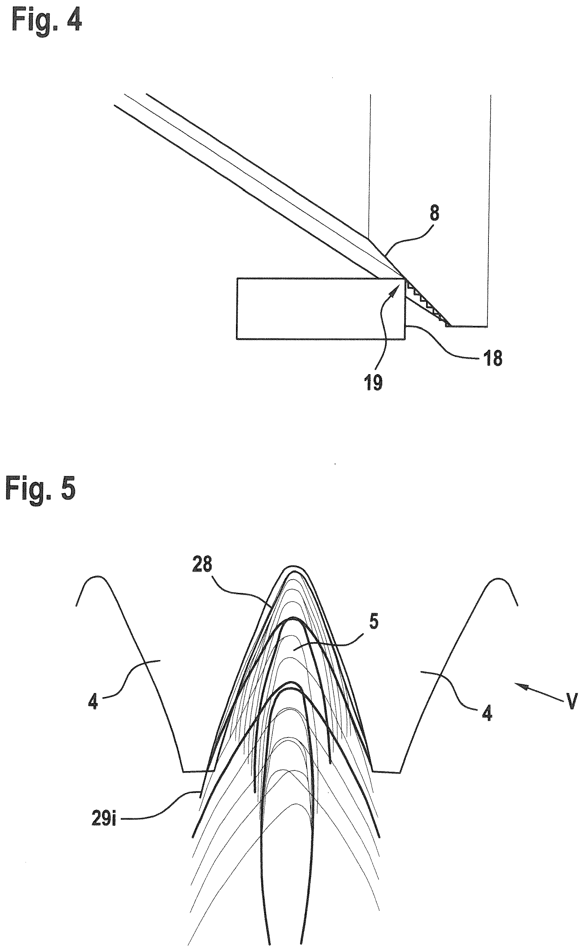

Zur Glättung der Fläche der Fase 8 wird in diesem Ausführungsbeispiel die Kante 19 der Werkzeugverzahnung 13 nochmals entlang der Fase 8 entlanggeführt. Hierzu wird die Bewegungsrichtung in Axialrichtung umgekehrt und die Beziehung zwischen der Verschiebung der Hüllkurve und der gegenwärtigen axialen Eintauchtiefe beibehalten, jedoch bevorzugt eine Phasenverschiebung um α bevorzugt im Bereich [90°-270°] vorgesehen. Es könnte auch mit geringerem Vorschub bei der Austauchbewegung als bei der Eintauchbewegung gearbeitet werden. Eine Momentsituation dieser glättenden Rückzugsbewegung ist in Fig. 4 dargestellt.

In Fig. 5 ist nochmals dargestellt, wie die Hüllkurve 28 aus den einzelnen Wälzstellungen 29i gegenüber ihrer dem Profil der Werkstückzahnflanke entsprechenden Nulllage aufgrund der Verschiebungsbewegung versetzt ist.

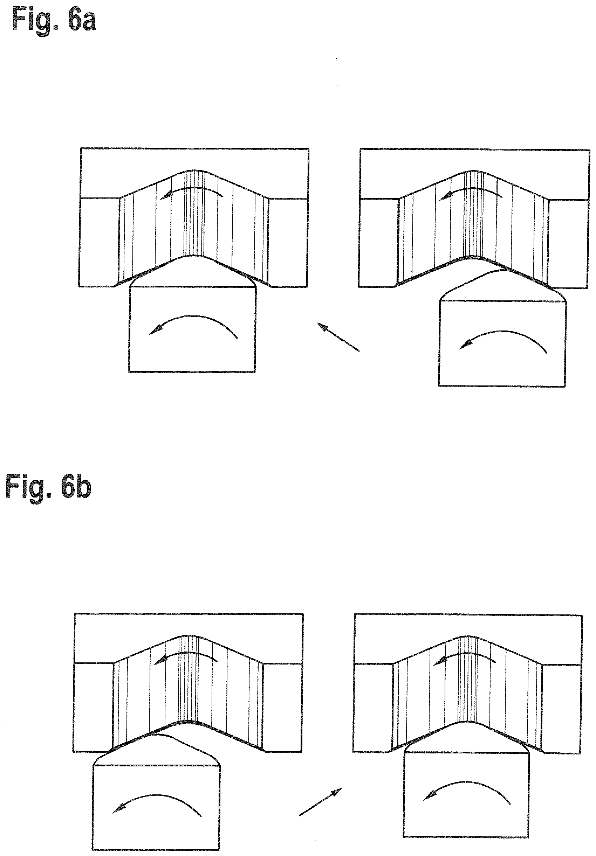

Aus den Figuren 6a und 6b sind nochmals Verschiebungsbewegungen erkennbar, sowie das in bevorzugten Verfahrensgestaltungen gewählte Einflankenverfahren (Rechts- und Linksflanke werden nicht gleichzeitig, sondern nacheinander angefast, jedoch in diesem Beispiel mit demselben Werkzeug).

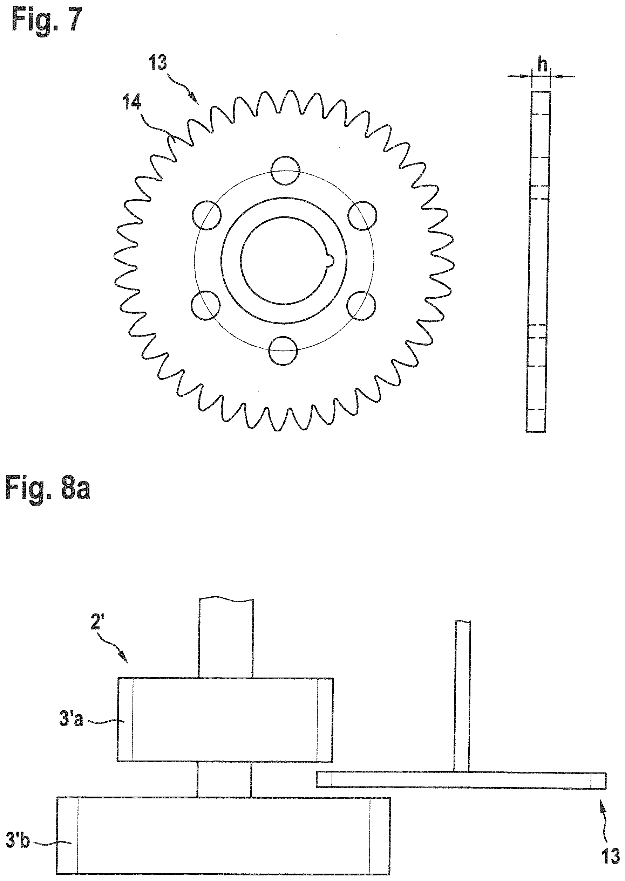

Fig. 7 zeigt ein Anfaswerkzeug in Draufsicht und in einer Seitenansicht. Aus letzterer ist ersichtlich, dass die Scheibendicke h der Werkzeugverzahnung in diesem Ausführungsbeispiel nur 3 mm beträgt. Das in Fig. 7 dargestellte Anfasrad weist bei einem Modul von 2 und einem Eingriffswinkel von 20° 40 Zähne auf. Es versteht sich, dass die Verzahnungsdaten wie Zähnezahl oder Scheibendicke auch andere Werte annehmen können.

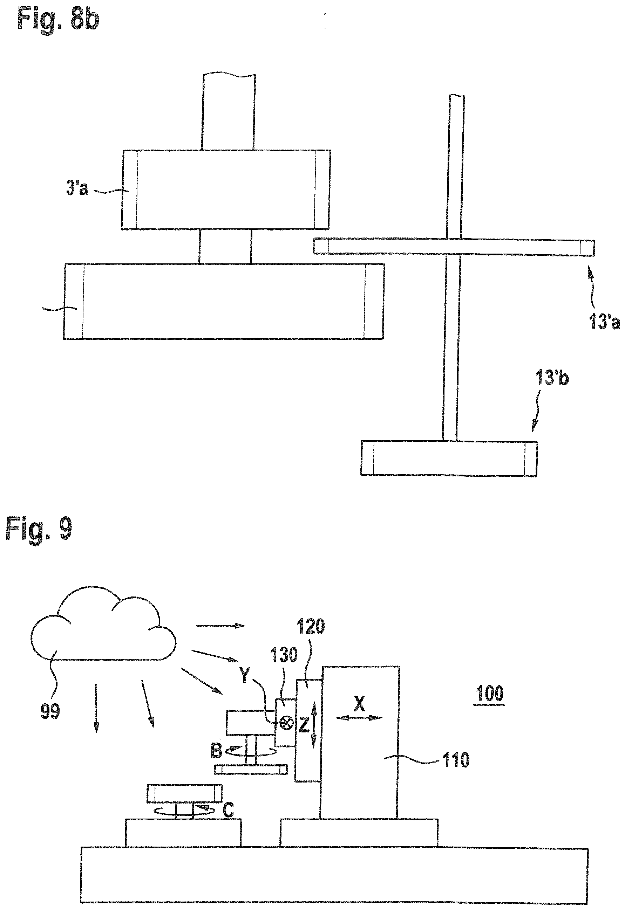

Vergleichsweise dünn gestaltete Anfasräder eignen sich aufgrund der zur Verzahnungsachse der Werkstückverzahnung parallel ausgerichteten Verzahnungsachse der Werkzeugverzahnung auch gut zur Bearbeitung von schwer zugänglichen Zahnkanten, wie beispielsweise in der in Fig. 8a schematisch dargestellten Situation, in der ein Werkstück 2' zwei verschiedene Außenverzahnungen 3' aufweist und die untere Stirnseite der oberen Verzahnung 3'a axial nur einen geringen Abstand von der oberen Stirnseite der unteren Verzahnung 3'b aufweist. In Fig. 8b ist das Werkzeug in Form eines Tandemwerkzeugs gebildet, das zwei Werkzeugverzahnungen trägt. Die eine Werkzeugverzahnung 13'a dient zum Anfasen der Werkstückverzahnung 3'a und die zweite Werkzeugverzahnung 13'b dem Anfasen der anderen Werkstückverzahnung 3'b.

Aus den Figuren 8a, b ist ebenfalls ersichtlich, dass sich durch das vorgestellte Verfahren Außenverzahnungen ebenso anfasen lassen wie die anhand von Fig. 1 beschriebene angefaste Innenverzahnung 3.

Ebenfalls versteht sich, dass, obwohl in Fig. 1 das Anfasverfahren für eine Geradverzahnung dargestellt ist, das Verfahren ebenso zum Anfasen von Schrägverzahnungen herangezogen werden kann. In diesem Fall könnte man die Werkzeugverzahnung passend zum Wälzeingriff mit parallelen Achsen ebenfalls als Schrägverzahnungen passend zum Schrägungswinkel der Werkstückverzahnung gestalten. Alternativ kommen schmale, insbesondere konisch gebildete, aber noch geradverzahnte Werkzeugverzahnungen in Betracht.

Eine in Fig. 9 dargestellte Anfaseinheit 100 ist in der Lage, die Werkzeugdrehachse B über drei Linearachsen X, Y, Z, realisiert über entsprechende Schlittenanordnungen 110, 130, 120, gegenüber der Werkstückdrehachse C (C parallel B) zu positionieren. Die Achsbewegungen X, Y, Z, B, C erfolgen NC-gesteuert über Steuerung 99. Für eine alternative einfachere Bauweise könnte der Schlitten 130 auch weggelassen werden.

Die in Fig. 9 schematisch dargestellte Anfaseinheit 100 könnte in eine Verzahnungsmaschine integriert werden, deren werkzeugseitige Hauptspindel ein die Werkstückverzahnung erzeugendes Werkzeug trägt, etwa ein Schälrad, einen Wälzfräser oder ein Wälzstoßrad. Dann könnte das Anfasen noch in der gleichen Werkstückaufspannung erfolgen wie die Hauptbearbeitung, oder auch an einem anderen Ort, durch eine entsprechende Automation wie etwa einen Ringlader, Greifer oder eine Doppelspindelanordnung vom Ort der Hauptbearbeitung zum Ort des Anfasens verbracht. Genauso kann die Anfaseinheit als eigenständige Anfasmaschine ausgebildet sein und können die Werkstücke durch eine Werkstückautomation erhalten werden, auch von mehreren Verzahnungsmaschinen, welche die bereits erzeugten Verzahnungen zur ergänzenden Zahnbearbeitung liefern.

Insbesondere wenn die Hauptbearbeitung und die ergänzende Bearbeitung nicht in der gleichen Aufspannung des Werkstücks erfolgen, ist vorgesehen, dass die (Anfas- )Bearbeitungseinheit noch Mittel zum Einmitten aufweist, etwa berührungslose Einmittsensoren, um die phasenrichtige relative Drehlage für die synchrone Wälzkopplung zu bestimmen.

Im Übrigen ist die Erfindung nicht auf die in den vorherigen Beispielen dargestellten Ausführungsformen eingeschränkt.

## Patentansprüche

1. Verfahren der spanenden Bearbeitung einer zwischen einer Zahnflanke und einer Stirnseite (2b) einer Werkstückverzahnung (3) gebildeten Zahnkante mit einer Werkzeugverzahnung (13), bei der die Verzahnungen (3, 13) in Wälzkopplung miteinander um ihre jeweilige Verzahnungsdrehachse (C, B) rotieren, wobei die beiden Verzahnungsdrehachsen (C, B) im Wesentlichen parallel zueinander stehen,
**dadurch gekennzeichnet, dass**
die Bearbeitung über eine Mehrzahl von Werkstückdrehungen hinweg erfolgt, wobei eine werkstückdrehachsparallele erste Relativbewegung (Z) zwischen Werkstückverzahnung (3) und Werkzeugverzahnung (13) ausgeführt wird sowie durch eine insbesondere in Abhängigkeit des Bewegungsstands der ersten Relativbewegung variierte zweite Relativbewegung (V) die Lage der Hüllkurve (28) der Werkzeugzahn-Wälzstellungen (29i) relativ zu ihrer Eingriffslage mit der Zahnflanke der Werkstückverzahnung in der Ebene (X-Y) orthogonal zur Werkstückdrehachse (C) quer zum Profil der Werkstückverzahnung verschoben wird.

2. Verfahren nach Anspruch 1, bei dem eine quer zur Achsabstandsachse der Drehachsen verlaufende Querbewegung (Q) von Werkstück- und/oder Werkzeugverzahnung zu der zweiten Relativbewegung beiträgt.

3. Verfahren nach Anspruch 2, bei der die Querbewegung (Q) eine Zusatzdrehung (ΔC) der Werkstückverzahnung umfasst.

4. Verfahren nach Anspruch 2 oder 3, bei der die Querbewegung eine Bewegung einer linearen Maschinenachse (Y) umfasst, deren Richtungskomponente orthogonal zur Werkstückdrehachse und orthogonal zur Achsabstandsachse (X) deren jeweilige Richtungskomponente entlang dieser Achsen überwiegt.

5. Verfahren nach einem der vorhergehenden Ansprüche, bei dem auch die Zahnkante im Zahnfuß der Werkstückverzahnung bearbeitet wird.

6. Verfahren nach einem der vorhergehenden Ansprüche, bei dem eine in Richtung der Achsabstandsachse der Drehachsen verlaufende Radialbewegung (ΔX) von Werkstück und/oder Werkzeugverzahnung zu der zweiten Relativbewegung beiträgt.

7. Verfahren nach einem der Ansprüche 2, 5 und 6, bei dem durch Einstellung der Radialbewegung in Abhängigkeit des Bewegungszustands der ersten Relativbewegung die Form der Fase (8) im Zahnfuß bewirkt wird und durch Einstellung der Querbewegung in Abhängigkeit des Bewegungsstands der ersten Relativbewegung und des Bewegungsstands der Radialbewegung die Form des Materialabtrags an der Zahnkante im Zahnflankenbereich bestimmt wird.

8. Verfahren nach einem der Ansprüche 3 und 4, bei dem durch eine Überlagerung der Querbewegungsbeiträge von Zusatzdrehung (ΔC) und linearer Maschinenachsbewegung (ΔX, ΔY) der Materialabtragsformverlauf in Zahnhöhenrichtung bestimmt wird.

9. Verfahren nach einem der vorhergehenden Ansprüche, mit einem weiteren Bearbeitungsdurchgang insbesondere ansonsten gleicher oder bevorzugt phasenverschobener Kopplung von erster und zweiter Relativbewegung, jedoch mit insbesondere umgekehrter Bewegungsrichtung der ersten Relativbewegung ausgeführter Bewegungssteuerung.

10. Verfahren nach einem der vorhergehenden Ansprüche, bei dem die Umlaufgeschwindigkeit am Zahnkopf des Werkstücks wenigstens 10 m/min, bevorzugt wenigstens 20 m/min, insbesondere wenigstens 40 m/min beträgt.

11. Verfahren nach einem der vorhergehenden Ansprüche, bei dem bei der Bearbeitung eine Fase (8) an der Zahnkante erzeugt wird.

12. Verfahren nach einem der vorhergehenden Ansprüche, bei dem das Profil der Werkzeugverzahnung im Wesentlichen das der bezüglich der Wälzkopplung Gegenverzahnung der Werkstückverzahnung ist.

13. Verfahren nach einem der vorhergehenden Ansprüche, das im Einflankenverfahren ausgeführt wird, wobei im Anschluss an die Bearbeitung der einen Zahnflanke(n) an einer der jeweiligen Zahnlücke(n) des Werkstücks die andere(n) Zahnflanke(n) bearbeitet werden.

14. Verfahren nach Anspruch 12, bei dem die Bearbeitung der anderen Zahnflanke(n) mit dem gleichen Werkzeug und/oder in der gleichen Aufspannung erfolgt wie die der einen Zahnflanke(n).

15. Verfahren nach einem der vorhergehenden Ansprüche, bei der die Zahndicke der Werkzeugverzahnung gegenüber der für die bei der Wälzkopplung für eine Zweiflankenbearbeitung erforderlichen Zahndicke vermindert ist.

16. Verfahren nach einem der vorhergehenden Ansprüche, bei dem die Abmessung (h) der Werkzeugverzahnung entlang der Werkzeugdrehachse geringer ist als 1,5 cm, bevorzugt geringer als 1 cm, weiter bevorzugt geringer als 0,7 cm, insbesondere als 0,4 cm.

17. Verwendung eines in Form einer Werkzeugverzahnung mit durch die Zahnflanken der Werkzeugverzahnung gebildeten Spanflächen gebildeten Anfaswerkzeugs (10) zur gemäß einem der vorhergehenden Ansprüche ausgeführten spanenden Bearbeitung einer zwischen einer Zahnflanke und Stirnseite einer Werkstückverzahnung gebildeten Zahnkante unter im Wesentlichen mit zueinander parallelen Verzahnungsdrehachsen in Wälzkopplung miteinander.

18. Steuerprogramm mit Steueranweisungen, das, wenn auf einer Verzahnungsmaschine ausgeführt, die Maschine zur Durchführung eines Verfahrens nach einem der Ansprüche 1 bis 16 steuert.

19. Verzahnungsmaschine (100) mit wenigstens einer Werkstückspindel zum drehenden Antrieb einer Werkstückverzahnung um ihre Werkstückdrehachse (C), und wenigstens einer Werkzeugspindel zum drehenden Antrieb einer Werkzeugverzahnung um ihre Drehachse (B), wenigstens einer ersten Maschinenachse (Z), die eine werkstückdrehachsparallele erste Relativbewegung zwischen Werkstückverzahnung und Werkzeugverzahnung erlaubt, **gekennzeichnet durch** eine Steuereinrichtung (99), welche Steueranweisungen zur Ausführung eines Verfahrens nach einem der Ansprüche 1 bis 16 aufweist.

## Claims

1. A method for machining a tooth edge formed between a tooth flank and an end face (2b) of a workpiece toothing (3), by means of a tool toothing (13), wherein the toothings (3, 13) rotate about their respective toothing rotational axes (C, B) in mutual rolling coupling, wherein the two toothing rotational axes (C, B) are substantially parallel to each other;
**characterized in that** the machining is carried out over a plurality of workpiece rotations, wherein a first relative movement (Z) between the workpiece toothing (3) and the tool toothing (13), parallel to the workpiece rotational axis, is carried out, and, by means of a second relative movement (V), which is in particular varied according to the movement state of the first relative movement, the position of the envelope (28) of the tool tooth rolling positions (29i) is shifted relative to the engagement position of said envelope with the tooth flank of the workpiece toothing in the plane (X-Y) orthogonal to the workpiece rotational axis (C), transversely to the profile of the workpiece toothing.

2. The method according to claim 1, wherein a transverse movement (Q) of the workpiece toothing and/or tool toothing running transversely to the centre distance axis of the rotational axes contributes to the second relative movement.

3. The method according to claim 2, wherein the transverse movement (Q) comprises an additional rotation (ΔC) of the workpiece toothing.

4. The method according to claim 2 or 3, wherein the transverse movement comprises a movement of a linear machine axis (Y) whose directional component orthogonal to the workpiece rotational axis and orthogonal to the centre distance axis (X) predominates over the respective directional component along these axes.

5. The method according to one of the preceding claims, wherein the tooth edge in the tooth base of the workpiece toothing is also machined.

6. The method according to one of the preceding claims, wherein a radial movement (ΔX) of the workpiece and/or tool toothing running in the direction of the centre distance axis of the rotational axes contributes to the second relative movement.

7. The method according to one of claims 2, 5 and 6, wherein the shape of the chamfer (8) is effected on the tooth base by adjusting the radial movement according to the movement state of the first relative movement, and the shape of the material removal at the tooth edge in the tooth flank region is determined by adjusting the transverse movement according to the movement state of the first relative movement and the movement state of the radial movement.

8. The method according to one of claims 3 and 4, wherein the profile of the material removal in the tooth height direction is determined by superimposing the transverse movement contributions from the additional rotation (ΔC) and the linear machine axis movement (ΔX, ΔY).

9. The method according to one of the preceding claims, comprising a further machining pass, which has in particular an otherwise identical or phase-shifted coupling of the first and second relative movement, and a movement control which is however carried out with a reverse movement direction of the first relative movement.

10. The method according to one of the preceding claims, wherein the rotational speed at the tooth tip of the workpiece is at least 10 m/min, preferably at least 20 m/min, more preferably at least 40 m/min.

11. The method according to one of the preceding claims, wherein a chamfer (8) is produced on the tooth edge during machining.

12. The method according to one of the preceding claims, wherein the profile of the tool toothing is substantially that of the counter-toothing of the workpiece toothing with respect to the rolling coupling.

13. The method according to one of the preceding claims, which is carried out using a single-flank process, wherein following the machining of one or more tooth flanks on one or more of the respective tooth gaps of the workpiece, one or more other tooth flanks are machined.

14. The method according to claim 12, wherein the machining of the one or more other tooth flanks is carried out with the same tool and/or in the same clamping process as those used for the one or more tooth flanks.

15. The method according to one of the preceding claims, wherein the tooth thickness of the tool toothing is reduced when compared to the tooth thickness required for a two-flank machining using rolling coupling.

16. The method according to one of the preceding claims, wherein the dimension (h) of the tool toothing along the tool rotational axis is less than 1.5 cm, preferably less than 1 cm, more preferably less than 0.7 cm and most preferably less than 0.4 cm.

17. Use of a chamfering tool (10) in the form of a tool toothing with machining surfaces formed by the tooth flanks of the tool toothing for machining - according to one of the preceding claims - a tooth edge formed between a tooth flank and the end face of a workpiece toothing, using toothing rotational axes that are substantially parallel to each other and with mutual rolling coupling.

18. A control program comprising control instructions which, when executed on a gear-cutting machine, controls the machine for carrying out a method according to one of claims 1 to 16.

19. A gear-cutting machine (100) comprising at least one workpiece spindle for rotatingly driving a workpiece toothing about its workpiece rotational axis (C), and at least one tool spindle for rotatingly driving a tool toothing about its rotational axis (B), and having at least one first machine axis (Z) which allows for a first relative movement between the workpiece toothing and tool toothing, parallel to the workpiece rotational axis, **characterized by** a control device (99) having control instructions for carrying out a method according to one of claims 1 to 16.

## Revendications

1. Procédé d'usinage par enlèvement de matière d'un bord de dent, formé entre un flanc de dent et une face (2b) d'une denture de pièce à usiner (3), avec une denture d'outil (13), au cours duquel usinage les dentures (3, 13) tournent, accouplées en position de taillage en développante, sur leur axe de rotation (C, B) respectif, les deux axes de rotation (C, B) étant sensiblement parallèles l'un à l'autre ;
**caractérisé en ce que** l'usinage s'effectue sur une pluralité de rotations de la pièce, un premier mouvement relatif (Z) parallèle à l'axe de rotation de la pièce s'effectuant entre la denture de la pièce (3) et la denture de l'outil (13), et l'emplacement de l'enveloppe (28) des positions de taillage en développante (29i) des dents de l'outil étant décalé, par rapport à son emplacement de contact avec le flanc de dent de la denture de la pièce dans le plan (XY) orthogonal à l'axe de rotation de la pièce (C), transversalement au profil de la denture de la pièce, par le biais d'un deuxième mouvement relatif (V) qui varie notamment en fonction de l'état de mouvement du premier mouvement relatif.

2. Procédé selon la revendication 1, dans lequel un mouvement transversal (Q) de la denture de la pièce et/ou de l'outil s'étendant transversalement à l'axe d'entraxe des axes de rotation contribue au deuxième mouvement relatif.

3. Procédé selon la revendication 2, dans lequel le mouvement transversal (Q) comprend une rotation supplémentaire (ΔC) de la denture de la pièce.

4. Procédé selon la revendication 2 ou 3, dans lequel le mouvement transversal comprend un mouvement d'un axe machine linéaire (Y) dont la composante directionnelle orthogonale à l'axe de rotation de la pièce et orthogonale à l'axe d'entraxe (X) prédomine sur leur composante directionnelle respective le long de ces axes.

5. Procédé selon l'une des revendications précédentes, dans lequel le bord de dent de la pièce est également usiné au niveau du pied de la dent.

6. Procédé selon l'une des revendications précédentes, dans lequel un mouvement radial (ΔX) de la denture de la pièce et/ou de l'outil s'étendant dans la direction de l'axe d'entraxe des axes de rotation contribue au deuxième mouvement relatif.

7. Procédé selon l'une des revendications 2, 5 et 6, dans lequel la forme du chanfrein (8) au niveau du pied de la dent est obtenue par ajustement du mouvement radial en fonction de l'état de mouvement du premier mouvement relatif et la forme de l'enlèvement de matière au niveau du bord de dent dans la zone du flanc de dent est déterminée par ajustement du mouvement transversal en fonction de l'état de mouvement du premier mouvement relatif et de l'état de mouvement du mouvement radial.

8. Procédé selon l'une des revendications 3 et 4, dans lequel le tracé de la forme par enlèvement de matière dans le sens de la hauteur des dents est déterminé par superposition des contributions de mouvement transversal assurées par la rotation supplémentaire (ΔC) et par le mouvement des axes machine linéaires (ΔX, ΔY).

9. Procédé selon l'une des revendications précédentes, comportant une passe d'usinage supplémentaire, notamment avec un accouplement par ailleurs identique ou de préférence décalé en phase des premier et deuxième mouvements relatifs, mais avec une commande de mouvement effectuée notamment dans le sens de déplacement opposé du premier mouvement relatif.

10. Procédé selon l'une des revendications précédentes, dans lequel la vitesse de rotation à la tête de la dent de la pièce est d'au moins 10 m/min, de préférence d'au moins 20 m/min, notamment d'au moins 40 m/min.

11. Procédé selon l'une des revendications précédentes, dans lequel un chanfrein (8) est réalisé sur le bord de dent au cours de l'usinage.

12. Procédé selon l'une des revendications précédentes, dans lequel le profil de la denture de l'outil est sensiblement celui de la denture de la pièce, en contre-denture eu égard à l'accouplement en position de taillage en développante.

13. Procédé selon l'une des revendications précédentes, mis en œuvre selon le procédé dit « sur un flanc », selon lequel, au terme de l'usinage d'un flanc de dent au niveau d'un entredent respectif de la pièce, l'autre flanc de dent est usiné.

14. Procédé selon la revendication 12, dans lequel l'usinage de l'autre flanc de dent est réalisé avec le même outil et/ou dans le même ablocage que celui dudit flanc de dent.

15. Procédé selon l'une des revendications précédentes, dans lequel l'épaisseur de dent de la denture de l'outil est réduite par rapport à l'épaisseur de dent nécessaire pour l'usinage sur deux flancs sous accouplement en position de taillage en développante.

16. Procédé selon l'une des revendications précédentes, dans lequel la dimension (h) de la denture de l'outil le long de l'axe de rotation de l'outil est inférieure à 1,5 cm, de préférence inférieure à 1 cm, plus préférentiellement inférieure à 0,7 cm, et notamment inférieure à 0,4 cm.

17. Utilisation d'un outil de chanfreinage (10) réalisé sous la forme d'une denture d'outil dotée de surfaces d'enlèvement de matière formées par les flancs de dents de la denture d'outil pour l'usinage d'un bord de dent formé entre un flanc de dent et une face d'une denture de pièce à usiner, effectué selon l'une des revendications précédentes, sous des axes de rotation de dentures sensiblement parallèles entre eux, sous accouplement en position de taillage en développante.

18. Programme de commande comprenant des instructions de commande qui, lorsqu'il est exécuté sur une machine à tailler les engrenages, commande la machine de façon qu'elle mette en œuvre un procédé selon l'une quelconque des revendications 1 à 16.

19. Machine à tailler les engrenages (100) comprenant au moins une broche porte-pièce destinée à faire tourner une denture de pièce sur son axe de rotation (C) et au moins une broche porte-outil destinée à faire tourner une denture d'outil sur son axe de rotation (B), et présentant au moins un premier axe machine (Z) permettant un premier mouvement relatif entre la denture de la pièce et la denture de l'outil parallèlement à l'axe de rotation de la pièce, **caractérisée par** un dispositif de commande (99) présentant des instructions de commande pour la mise en œuvre d'un procédé selon l'une des revendications 1 à 16.
